# EUROPEAN PATENT SPECIFICATION

(11) **EP 1 245 448 B1**
(45) Date of publication and mention of the grant of the patent: **21.12.2005**
(21) Application number: 02076292.8
(22) Date of filing: 27.03.2002
(51) Int. Cl.: B60R 9/10, B60R 9/06, B60R 9/08

(54) **Cycle carrier**
Fahrradträger
Porte-cycles

(30) Priority: 30.03.2001 NL 1017753
(43) Date of publication of application: 02.10.2002
(73) Proprietor: Publiekrechtelijk Overheidslichaam Felua Groep, 7334 AC Apeldoorn (NL)
(72) Inventor: Visch, Herman, 8162 ZP Epe (NL); Vreeling, Gerhardus Nicolaas, 7391 PL Twello (NL)
(74) Representative: Dokter, Hendrik Daniel

(56) References cited:
- EP-A- 1 070 638
- US-A- 3 720 333
- US-A- 4 189 274
- US-A- 4 275 981
- US-A- 4 646 952

## Description

The invention relates to a cycle carrier comprising a frame which is fixable horizontally onto a towing hook of a vehicle and which has at least one elongate channel profile which is coupled thereto for placing a cycle therein and which extends in transverse direction of said vehicle in the position of use.

Such a cycle carrier is generally known, e.g. from the US patent 4.646.952, which document discloses a cycle carrier according to the preamble of claim 1, comprising a rack which includes a fixable portion which is preferably welded to the frame of a vehicle near the rear bumper or end surface of the vehicle. A movable motorcycle carrier portion is configured to slidably engage the fixable portion and, once the portions are engaged, the are locked together.

US patent 4.189.274 discloses a cycle carrier to facilitate loading and unloading of two-wheeled cycles from motor vehicle bumpers having and adjusted ramp assembly and mechanism for linear as well as rotational movement of the track assembly.

Construction and load capacity of the known cycle carriers enable transport of cycles without motor as well as motorized cycles or motor-assisted cycles.

It is perceived as a drawback of the known cycle carriers that placing thereon of a motorized cycle or motor-assisted cycle is not simple. These types of cycle are generally more bulky and heavier than cycles without motor, and this makes placing on a cycle carrier more difficult. This is perceived to be all the more of a drawback because the choice for a cycle with a motor is often prompted for the user thereof by the need for comfort or by the necessity to avoid exertion of physical effort.

It is an object of the invention to provide a cycle carrier on which a cycle which may or may not be motorized or motor-assisted can be placed in simple manner or from which a cycle placed thereon can be easily removed.

This objective is achieved with a cycle carrier of the type stated in the preamble, wherein according to the invention the channel profile is coupled to the frame for pivoting on a shaft lying in longitudinal direction of the vehicle in a manner such that, in the position of use of the cycle carrier, an outer end of the channel profile is downwardly tiltable and supportable on an underlying road surface for the purpose of placing a cycle in this channel profile or removing a cycle placed in this channel profile, wherein the channel profile is displaceable in its longitudinal direction relative to the frame, the channel profile being coupled displaceably in longitudinal direction to a guide rail pivotable on said shaft in longitudinal direction of the vehicle and connectable to the frame.

With a frame in the position of use, i.e. in a situation where the frame is fixed onto the towing hook of a vehicle, such a channel profile can be pulled out in transverse direction of the vehicle and then folded down until the channel profile rests on the road surface. In this latter situation a cycle can be moved into the obliquely rising channel profile, whereafter the channel profile with cycle is folded up again into horizontal position and pushed back, whereafter the channel profile and the cycle can be locked with locking means present for that purpose.

In a simple embodiment the channel profile comprises a single basic channel profile.

In another embodiment the channel profile comprises a basic channel profile and at least one extension profile part coupled to this basic channel profile and displaceable in its longitudinal direction.

In this latter embodiment the length of a channel profile required for placing a cycle is provided by the basic channel profile and the extension profile part, while this latter part can be displaced along the basic channel profile when the cycle carrier is not in use in order to reduce the total length, thus facilitating storage of a cycle carrier which is not in use.

In yet another embodiment the channel profile comprises a basic channel profile and two extension profile parts which are coupled to this basic channel profile and displaceable in their longitudinal direction and which are each tiltable on a shaft in their longitudinal direction.

In a preferred embodiment the basic channel profile and the two extension profile parts have substantially the same length, wherein a first extension profile part is accommodated for displacement along the basic channel profile in the longitudinal direction thereof between an extended position, in which the first extension profile part is situated substantially outside a first end of the basic channel profile, and a retracted position in which the first extension profile part is situated substantially along a first longitudinal side of the basic channel profile, and wherein a second extension profile part is accommodated for displacement along the basic channel profile in the longitudinal direction thereof between an extended position, in which the second extension profile part is situated substantially outside a second end of the basic channel profile, and a retracted position in which the second extension profile part is situated substantially along a second longitudinal side of the basic channel profile.

In this cycle carrier the total length of the channel profile when out of use is only about half the length of the total length in the position of use.

The cycle carrier according to the latter embodiment is for instance provided with locking means for locking the first and the second extension profile part in the extended position.

In an embodiment the frame of a cycle carrier according to the invention is provided with two rods for securing a cycle placed in at least one of the channels, which rods stand upright from the frame in the position of use of the cycle carrier and are connected on their upper part by a crossbar.

In this embodiment the frame is preferably coupled pivotally to the rods, thus achieving that the cycle carrier, when not in use as such, can be folded up to form an exceptionally compact unit, and thus takes up only a small amount of space in a storage area.

In a practical embodiment the cycle carrier is provided in the latter embodiments with at least one bracket tiltable on the crossbar and displaceable therealong, with which bracket a cycle placed on the cycle carrier can be secured.

The invention will now be elucidated hereinbelow on the basis of embodiments and with reference to the annexed drawings.

In the drawings:
Fig. 1 shows in perspective view a removable cycle carrier for a car with two channel profiles according to the invention in a situation where the extension profile parts are in extended position and the two channel profiles are folded down,
Fig. 2 shows in perspective view the cycle carrier of fig. 1 in a situation where the channel profiles with extension profile parts are in retracted position,
Fig. 3 shows a cross-section through the channel profile of fig. 1 along the line III-III,
Fig. 4 shows in exploded view a part of a guide rail and a basic channel profile of a channel profile as shown in fig. 1,
Fig. 5(a), (b), (c), (d) show in perspective view a part of a basic channel profile, and extension profile part coupled thereto and a locking clamp in successive stages from full locking to a situation where an extension profile part is tilted aside,
Fig. 6(a), (b) are cross-sections through the parts shown respectively in fig. 5(a), (b),
Fig. 7 shows in perspective view the cycle carrier of fig. 1 in a situation where the extension profile parts are in extended position and extend horizontally to support two cycles (not shown), and
Fig. 8 shows in perspective view the cycle carrier of fig. 1 in a situation where the channel profiles with extension profile parts are in retracted position, and the frame is folded up relative to the upright parts in order to make the size of the cycle carrier as small as possible, for instance for storage.

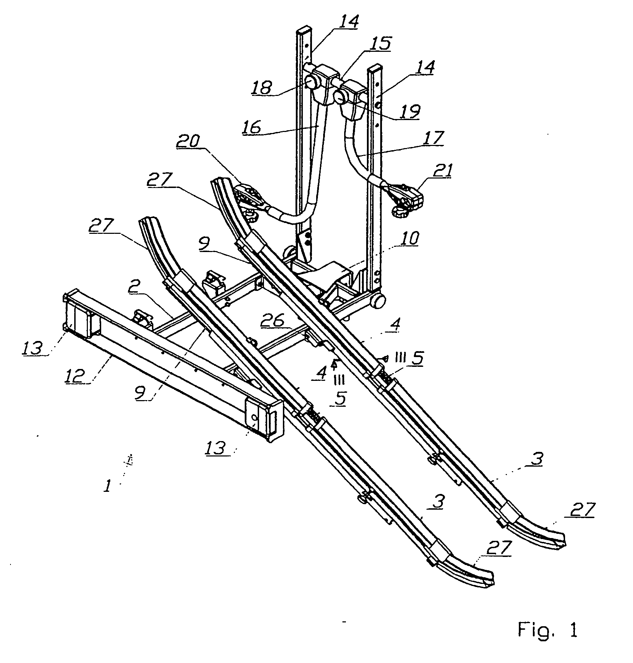

Fig. 1 shows a removable cycle carrier 1 with a U-shaped horizontal frame 2 which can be fixed on its front side by means of a per se known coupling device 10 onto the ball of the towing hook of a car, and with two channel profiles which each consist of a basic channel profile 5 and two extension profile parts 3, 4 displaceable therealong. Basic channel profile 5 is displaceable in longitudinal direction over a guide rail 9 which is coupled to frame 2 for tilting on a shaft 26. Extension profile parts 3, 4 are provided on their ends remote from each other with curved, plastic cycle channels 27. Both channel profiles are shown with the basic channel profiles 5 and extension profile parts 3, 4 in extended and tilted position. The figure further shows a lighting fitting 12 mounted on frame 2 having the legally prescribed lights 13, and two rods 14 standing upright from frame 2 and having a crossbar 15 on their upper part for securing cycles placed in channels 3, 4, 5, for which purpose there are arranged brackets 16, 17 tiltable on crossbar 15 and displaceable therealong and provided with respective adjusting screws 18, 19 and clamps 20, 21 for arranging round the saddle pin of a cycle.

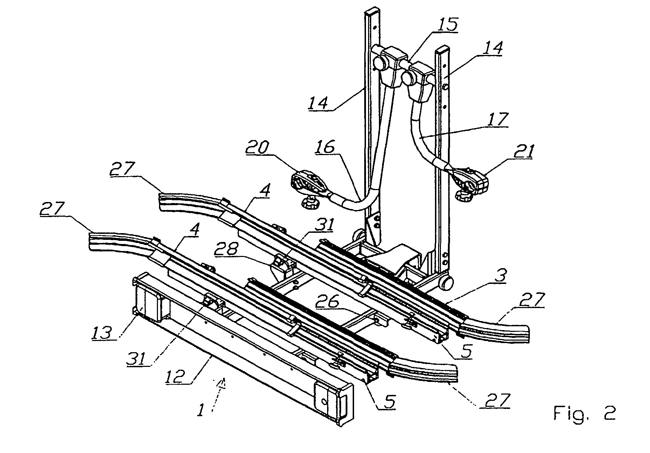

Fig. 2 shows cycle carrier 1 of fig. 1 in a situation where the extension profile parts 3, 4 are in the retracted position and where both basic channel profiles 5 are pushed over the corresponding guide rails 9, and thereby over frame 2, wherein on the leg of the U-shaped frame 2 lying opposite the tilting shafts 26 the guide rails 9 are each locked with a per se known lift and turn locking device 31 onto supports 28 on frame 2. Brackets 16, 17 are folded down.

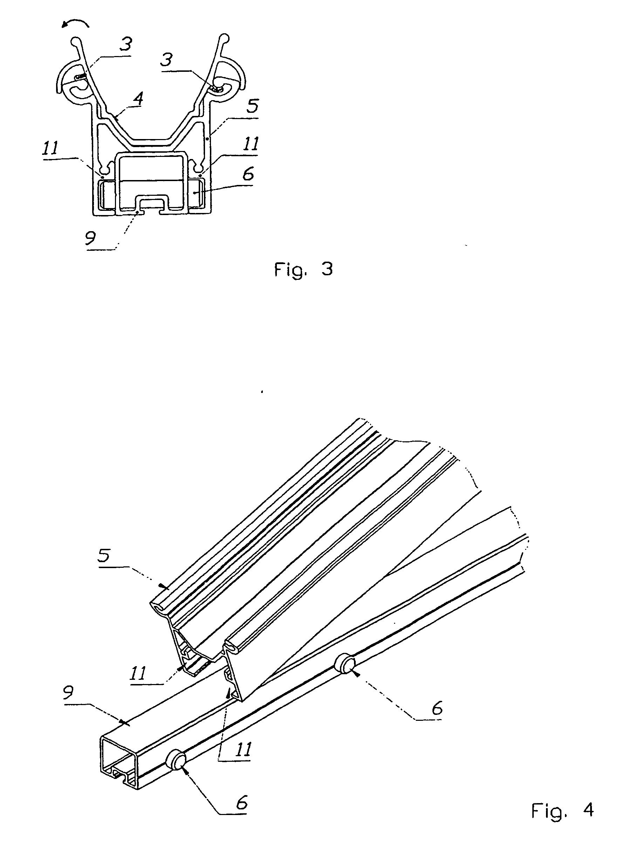

Fig. 3 shows in a cross-section through the channel profile shown in fig. 1 along line III-III how in the depicted situation the extension profile part 4 furthest to the left is tiltable to the left, as according to the curved arrow, relative to basic channel profile 5. The extension profile parts 3, 4 of asymmetrical cross-section are coupled in opposing directions to basic channel profile 5, as a result of which the extension profile parts 4 on the left in fig. 1 are tiltable to the left and the extension profile parts 3 on the right in fig. 1 (shown as dark parts in fig. 3) are tiltable to the right, so that both parts can be pushed adjacently of each other over basic channel profile 5, as shown in fig. 2. Basic channel profile 5 is displaceable in longitudinal direction over guide rail 9 by means of U-shaped longitudinal profiles 11 which are slidable over two pairs of transverse cams 6 extending transversely of guide rail 9.

Fig. 4 shows a part of a guide rail 9 with two transverse cams 6 protruding on either side which fall into two U-shaped longitudinal profiles 11 in the interior of a basic channel profile 5, whereby basic channel profile 5 is displaceable in longitudinal direction relative to guide rail 9.

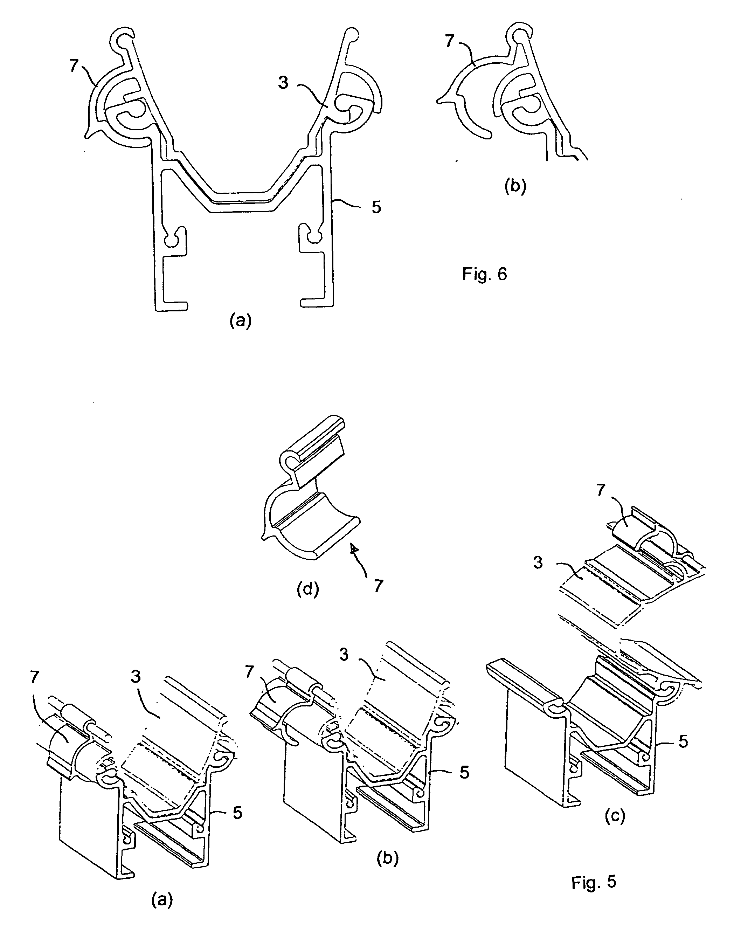

Fig. 5(a), (b), (c) and (d) show part of a basic channel profile 5, and extension profile part 3 coupled thereto and tiltable to the right, and a plastic (POM) locking clamp 7 with which the extension profile part 3 is locked onto basic channel profile 5, in successive stages from full locking (fig. 5(a)), fully unlocked (fig. 5(b)) to tilted to the right (fig. 5(c)), and the locking clamp 7 in released position (fig. 5(d)).

Fig. 6(a), (b) show cross-sections through the parts shown respectively in fig. 5(a), (b).

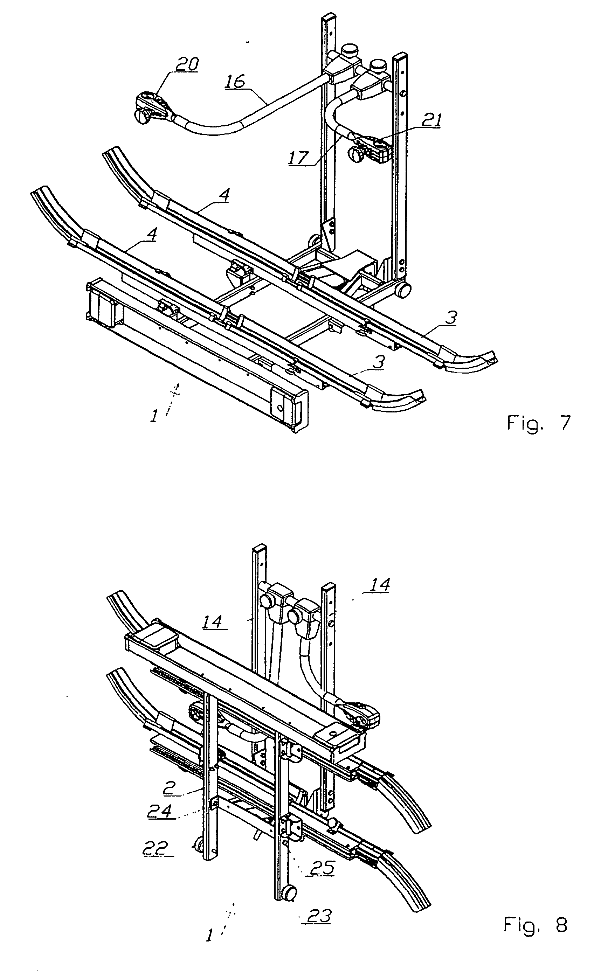

Fig. 7 shows cycle carrier 1 of fig. 1 in a situation where extension profile parts 3, 4 are in extended position and brackets 16, 17 extend horizontally to secure cycles (not shown) placed in channels 3, 4, 5, wherein the shorter bracket 17 engages with a clamp 22 on the saddle pin of the foremost cycle placed with the handlebar to the left, and the longer bracket 16 engages with a clamp 20 on the saddle pin of the rearmost cycle placed with the handlebar to the right.

Fig. 8 shows cycle carrier 1 in a situation where the channel profiles with extension profile parts 3, 4 are in retracted position, and frame 2, after release of locking screws 22, 23, is folded down on hinges 24, 25 relative to the upright parts 14.

## Claims

1. Cycle carrier (1), comprising a frame (2) which is fixable horizontally onto a towing hook of a vehicle and which has at least one elongate channel profile (3, 4, 5) which is coupled thereto for placing a cycle therein and which extends in transverse direction of said vehicle in the position of use, **characterized in that** the channel profile (3, 4, 5) is coupled to the frame (2) for pivoting on a shaft (26) lying in longitudinal direction of the vehicle in a manner such that, in the position of use of the cycle carrier (1), an outer end of the channel profile (3, 4, 5) is downwardly tiltable and supportable on an underlying road surface for the purpose of placing a cycle in this channel profile (3, 4, 5) or removing a cycle placed in this channel profile (3, 4, 5), and **in that** the channel profile (3, 4, 5) is displaceable in its longitudinal direction relative to the frame (2), the channel profile (5) being coupled displaceably in longitudinal direction to a guide rail (9) which is pivotable on said shaft (26) in longitudinal direction of the vehicle and connectable to the frame (2).

2. Cycle carrier (1) as claimed in claim 1, **characterized in that** the channel profile comprises a single basic channel profile (5).

3. Cycle carrier (1) as claimed in either of the claims 1-2, **characterized in that** the channel profile comprises a basic channel profile (5) and at least one extension profile part (3, 4) coupled to this basic channel profile (5) and displaceable in its longitudinal direction.

4. Cycle carrier (1) as claimed in any of the claims 1-3, **characterized in that** the channel profile comprises a basic channel profile (5) and two extension profile parts (3) which are coupled to this basic channel profile (5) and displaceable in their longitudinal direction and which are each tiltable on a shaft extending in their longitudinal direction.

5. Cycle carrier (1) as claimed in claim 4, **characterized in that** the basic channel profile (5) and the extension profile parts (3, 4) have substantially the same length, wherein a first extension profile part (3) is accommodated for displacement along the basic channel profile (5) in the longitudinal direction thereof between an extended position, in which the first extension profile part (3) is situated substantially outside a first end of the basic channel profile (5), and a retracted position in which the first extension profile part (3) is situated substantially along a first longitudinal side of the basic channel profile (5), and wherein a second extension profile part (4) is accommodated for displacement along the basic channel profile (5) in the longitudinal direction thereof between an extended position, in which the second extension profile part (4) is situated substantially outside a second end of the basic channel profile (5), and a retracted position in which the second extension profile part (4) is situated substantially along a second longitudinal side of the basic channel profile (5).

6. Cycle carrier (1) as claimed in claim 5, provided with locking means (7) for locking the first and the second extension profile part in the extended position.

7. Cycle carrier (1) as claimed in any of the claims 1-6, **characterized in that** the frame (2) is provided with two rods (14) standing upright from the frame (2) in the position of use of the cycle carrier and connected on their upper part by a crossbar (15) for securing a cycle placed in at least one of the channels (3, 4, 5).

8. Cycle carrier as claimed in claim 7, **characterized in that** the frame (2) is coupled pivotally to the rods (14).

9. Cycle carrier as claimed in either of the claims 7-8, **characterized in that** it is provided with at least one bracket (16, 17) tiltable on the crossbar (15) and displaceable therealong.

## Patentansprüche

1. Fahrradträger (1), der einen horizontal an einer Anhängerkupplung eines Fahrzeugs befestigbaren Rahmen (2) umfasst, der zumindest ein längliches Rinnenprofil (3, 4, 5) hat, das daran gekoppelt ist, um ein Fahrrad hinein zu stellen, und das sich im Gebrauchszustand in Querrichtung zu besagtem Fahrzeug erstreckt, **dadurch gekennzeichnet, dass** das Rinnenprofil (3, 4, 5) auf solche Weise drehbar um eine in Längsrichtung des Fahrzeugs liegende Achse (26) an den Rahmen (2) gekoppelt ist, dass im Gebrauchszustand des Fahrradträgers (1) ein äußeres Ende des Rinnenprofils (3, 4, 5) nach unten gekippt und auf eine sich darunter befindende Straßenoberfläche gestützt werden kann, um ein Fahrrad in dieses Rinnenprofil (3, 4, 5) zu stellen oder ein in dieses Rinnenprofil (3, 4, 5) gestelltes Fahrrad herauszunehmen, und dass das Rinnenprofil (3, 4, 5) in seiner Längsrichtung in Bezug auf den Rahmen (2) verstellt werden kann, wobei das Rinnenprofil (5) verstellbar in Längsrichtung an eine Führungsschiene (9) gekoppelt ist, die um besagte Achse (26) in Längsrichtung des Fahrzeugs gedreht und an den Rahmen (2) gekoppelt werden kann.

2. Fahrradträger (1) nach Anspruch 1, **dadurch gekennzeichnet, dass** das Rinnenprofil ein einfaches Basisrinnenprofil (5) umfasst.

3. Fahrradträger (1) nach einem der Ansprüche 1-2, **dadurch gekennzeichnet, dass** das Rinnenprofil ein Basisrinnenprofil (5) und zumindest ein Verlängerungsprofilteil (3, 4), das an dieses Basisrinnenprofil (5) gekoppelt und in seiner Längsrichtung verstellbar ist, umfasst.

4. Fahrradträger (1) nach einem der Ansprüche 1-3, **dadurch gekennzeichnet, dass** das Rinnenprofil ein Basisrinnenprofil (5) und zwei Verlängerungsprofilteile (3), die an dieses Basisrinnenprofil (5) gekoppelt und in ihrer Längsrichtung verstellbar sind und die beide um eine sich in ihrer Längsrichtung erstreckende Achse gekippt werden können, umfasst.

5. Fahrradträger (1) nach Anspruch 4, **dadurch gekennzeichnet, dass** das Basisrinnenprofil (5) und die Verlängerungsprofilteile (3, 4) im Wesentlichen dieselbe Länge haben, wobei ein erstes Verlängerungsprofilteil (3) entlang dem Basisrinnenprofil (5) in dessen Längsrichtung verstellbar zwischen einer ausgefahrenen Position, in der sich das erste Verlängerungsprofilteil (3) im Wesentlichen außerhalb eines ersten Endes des Basisrinnenprofils (5) befindet, und einer eingefahrenen Position, in der sich das erste Verlängerungsprofilteil (3) im Wesentlichen entlang einer ersten Längsseite des Basisrinnenprofils (5) befindet, aufgenommen ist, und wobei ein zweites Verlängerungsprofilteil (4) entlang dem Basisrinnenprofil (5) in dessen Längsrichtung verstellbar zwischen einer ausgefahrenen Position, in der sich das zweite Verlängerungsprofilteil (4) im Wesentlichen außerhalb eines zweiten Endes des Basisrinnenprofils (5) befindet, und einer eingefahrenen Position, in der sich das zweite Verlängerungsprofilteil (4) im Wesentlichen entlang einer zweiten Längsseite des Basisrinnenprofils (5) befindet, aufgenommen ist.

6. Fahrradträger (1) nach Anspruch 5, der mit Sicherungsmitteln (7) versehen ist, um das erste und das zweite Verlängerungsprofilteil in der ausgefahrenen Position zu sichern.

7. Fahrradträger (1) nach einem der Ansprüche 1-6, **dadurch gekennzeichnet, dass** der Rahmen (2) mit zwei im Gebrauchszustand des Fahrradträgers an dem Rahmen (2) aufrechtstehenden und an ihren oberen Teilen mit einer Querstange (15) verbundenen Stangen (14) versehen ist, um ein in zumindest eine der Rinnen (3, 4, 5) gestelltes Fahrrad zu sichern.

8. Fahrradträger nach Anspruch 7, **dadurch gekennzeichnet, dass** der Rahmen (2) drehbar an die Stangen (14) gekoppelt ist.

9. Fahrradträger nach einem der Ansprüche 7-8, **dadurch gekennzeichnet, dass** er mit zumindest einem um die Querstange (15) kippbaren und entlang dieser verstellbaren Bügel (16, 17) versehen ist.

## Revendications

1. Porte-cycles (1), comprenant un cadre (2) pouvant être fixé horizontalement sur un crochet de remorquage d'un véhicule et présentant au moins un profil de canal allongé (3, 4, 5) couplé à celui-ci pour placer un cycle dans celui-ci et s'étendant dans la direction transversale dudit véhicule dans la position d'utilisation, **caractérisé en ce que** le profil de canal (3, 4, 5) est couplé au cadre (2) pour pivoter sur un arbre (26) s'étendant dans la direction longitudinale du véhicule d'une manière telle que, dans la position d'utilisation du porte-cycles (1), une extrémité extérieure du profil de canal (3, 4, 5) puisse être inclinée vers le bas et posée sur une surface routière située en dessous dans le but de pouvoir placer un cycle dans ce profil de canal (3, 4, 5) ou de retirer un cycle placé dans ce profil de canal (3, 4, 5), et **en ce que** le profil de canal (3, 4, 5) est déplaçable dans sa direction longitudinale par rapport au cadre (2), le profil de canal (5) étant couplé d'une façon déplaçable dans la direction longitudinale à un rail de guidage (9) pouvant pivoter sur ledit arbre (26) dans la direction longitudinale, et pouvant être connecté au cadre (2).

2. Porte-cycles (1) selon la revendication 1, **caractérisé en ce que** le profil de canal comprend un seul profil de canal de base (5).

3. Porte-cycles (1) selon l'une ou l'autre des revendications 1 et 2, **caractérisé en ce que** le profil de canal comprend un profil de canal de base (5) et au moins une partie de profil d'extension (3, 4) couplée à ce profil de canal de base (5) et déplaçable dans sa direction longitudinale.

4. Porte-cycles (1) selon l'une quelconque des revendications 1 à 3, **caractérisé en ce que** le profil de canal comprend un profil de canal de base (5) et deux parties de profil d'extension (3) couplées à ce profil de canal de base (5) et déplaçables dans leur direction longitudinale, toutes les deux étant inclinables sur un arbre s'étendant dans leur direction longitudinale.

5. Porte-cycles selon la revendication 4, **caractérisé en ce que** le profil de canal de base (5) et les parties de profil d'extension (3, 4) ont sensiblement la même longueur, dans lequel une première partie de profil d'extension (3) est adaptée pour se déplacer le long du profil de canal de base (5) dans la direction longitudinale de celui-ci entre une position étendue, dans laquelle la première partie de profil d'extension (3) est située essentiellement à l'extérieur d'une première extrémité du profil de canal de base (5), et une position rentrée dans laquelle la première partie de profil d'extension (3) est située essentiellement le long d'un premier côté longitudinal du profil de canal de base (5), et dans lequel une deuxième partie de profil d'extension (4) est adaptée pour se déplacer le long du profil de canal de base (5) dans la direction longitudinale de celui-ci entre une position étendue, dans laquelle la deuxième partie de profil d'extension (4) est située essentiellement à l'extérieur d'une deuxième extrémité du profil de canal de base (5), et une position rentrée dans laquelle la deuxième partie de profil d'extension (4) est située essentiellement le long d'un deuxième côté longitudinal du profil de canal de base (5).

6. Porte-cycles (1) selon la revendication 5, équipé de moyens de verrouillage (7) pour verrouiller les première et deuxième parties de profil d'extension dans la position étendue.

7. Porte-cycles (1) selon l'une quelconque des revendications 1 à 6, **caractérisé en ce que** le cadre (2) comporte deux tiges (14) se dressant vers le haut à partir du cadre (2) dans la position d'utilisation du porte-cycles et reliées sur leur partie supérieure par une barre transversale (15) pour arrimer un cycle placé dans au moins un des canaux (3, 4, 5).

8. Porte-cycles (1) selon la revendication 7, **caractérisé en ce que** le cadre (2) est couplé d'une façon pivotante aux tiges (14).

9. Porte-cycles (1) selon l'une ou l'autre des revendications 7 et 8, **caractérisé en ce qu'**il comprend au moins un bras (16, 17) inclinable sur la barre transversale (15) et déplaçable le long de celle-ci.
